# EUROPÄISCHE PATENTSCHRIFT

(11) **EP 0 815 732 B1**
(45) Veröffentlichungstag und Bekanntmachung des Hinweises auf die Patenterteilung: **06.08.2003**
(21) Anmeldenummer: 97109992.4
(22) Anmeldetag: 19.06.1997
(51) Int. Cl.: A22C 13/00

(54) **Raupenförmige Verpackungshülle**
Shirred packaging wrapper
Enveloppe d'emballage plissée

(30) Priorität: 24.06.1996 DE 19625094
(43) Veröffentlichungstag der Anmeldung: 07.01.1998
(73) Patentinhaber: Kalle GmbH & Co. KG, 65203 Wiesbaden (DE)
(72) Erfinder: Auf Der Heide, Christian, 49080 Osnabrück (DE); Auf Der Heide, Dirk, 49594 Alfhausen (DE); Hammer, Klaus-Dieter, 55120 Mainz (DE); Stenger, Karl, 65395 Rüdesheim (DE)
(74) Vertreter: Zounek, Nikolai, Dipl.-Ing.

(56) Entgegenhaltungen:
- EP-A- 0 176 980
- EP-A- 0 302 571
- EP-A- 0 559 084
- EP-A- 0 573 306
- EP-A- 0 640 289
- WO-A-87/03452
- DE-A- 3 943 024
- FR-A- 2 120 098
- FR-A- 2 441 558
- GB-A- 1 572 266
- US-A- 3 834 920

## Beschreibung

Die Erfindung betrifft eine raupenförmige Verpackungshülle auf der Basis von Polymerblends, insbesondere eine künstliche Wursthülle auf der Basis von Polyamid, die aus biaxial streckorientiertem und thermofixiertem Schlauchmaterial gerafft ist, wobei auf das Schlauchmaterial vor dem Raffen eine Sprühlösung aufgetragen ist, die einen Emulgator enthält.

Es gibt bereits zahlreiche Kunststoffolien zur Verpackung von pastös oder schmelzflüssig abfüllbaren Lebensmitteln. In der Regel werden sie auf der Basis von Polyethylen-terephthalat (PET), Polyvinylidenchlorid (PVDC) und Polyamid (PA) hergestellt. Biaxial verstreckte PET-Hüllen eignen sich jedoch nicht für Koch-und Brühwurst, da sie sich kaum dehnen lassen und auch nur wenig schrumpfen können. PVDC-Hüllen sind zwar wesentlich dehnbarer, verlieren aber nach dem Füllen leichter ihre Form. Dies wird besonders deutlich, wenn die Würste über längere Zeit hängen. Polyamidhüllen sind dehnbarer, schrumpfen mehr und sind deshalb für Koch- und Brühwurst besser geeignet.

Die EP- 0 640 289 A2 hat sich die Aufgabe gestellt, eine füllfertige konditionierte Raffraupe aus einem coextrudierten Folienschlauch bereit zu stellen, der auf der Außenseite ein Raffschmiermittel enthält, ohne dass es zu Nachteilen hinsichtlich der Bedruckbarkeit, der Herstellkosten und des Füllautomatenlaufs kommt.

Hierzu ist eine mindestens zweischichtig koextrudierte Schlauchfolie zur Umhüllung von Wurstbrät vorgesehen, die eine außenliegende Schicht enthält, die bis ihrer Sättigung wenigstens 8 Gew.-% an Wasser aufnehmen kann und eine weitere Schicht mit wasserdampfsperrendem Charakter, wobei auf die Außenschicht eine Ölemulsion im Verlauf des Raffprozesses aufgetragen wird. Die Ölemulsion dient als Raffschmiermittel und enthält einen oder mehrere Emulgatoren für das Öl.

In der DE-A 28 50 182 (≈ GB-A 2 035 198) ist eine in Längs- und Querrichtung schrumpffähig verstreckte und thermofixierte, einschichtige Hülle aus einem aliphatischen Polyamid, dessen Glasumwandlungspunkt im trockenen Zustand mindestens 48 °C beträgt und sich bei Feuchtigkeitsaufnahme auf mindestens 3 °C erniedrigt, beschrieben. Konkret offenbart sind Polyamid 6 (= Polycaprolactam), Polyamid 7 [= Poly(7-amino-heptansäurelactam) = Poly(x-önanthsäurelactam)], Polyamid 6,6 (= Polyamid aus Hexamethylendiamin und Adipinsäure) und Polyamid 6,10 [= Polyamid aus Hexamethylendiamin und Decandisäure (= Sebacinsäure)].

Eine ähnliche Hülle ist in der DE-A 28 50 181 (≈ GB-A 2 035 198) beschrieben. Sie besteht aus einem Polymerblend, das neben dem aliphatischen Polyamid noch ein lonomerharz, ein modifiziertes Ethylen/Vinylacetat-Copolymer und/oder ein quartäres Polymer mit Einheiten aus Ethylen, Butylen, einer aliphatischen, ethylenisch ungesättigten (C₃-C₅)Carbonsäure und einem Ester dieser Carbonsäure mit (C₁-C₈)Alkoholen enthält. Die Hülle zeigt nach dem Anschneiden eine verringerte Neigung zum Weiterreißen. Diese Hüllen werden ebenfalls für Koch- und Brühwurst verwendet. Das Wurstbrät muß jedoch mit einem Druck von etwa 0,3 bis 0,6 bar eingefüllt werden, um die Hülle zu dehnen.

Da das Wurstbrät nach dem Brühen an Volumen verliert, muß die Hülle diesen Verlust ausgleichen, damit sie faltenfrei anliegt, d.h. sie muß in gleichem Maß schrumpfen wie ihr Inhalt. Die bekannten Hüllen sind aber nur begrenzt schrumpffähig und werden deshalb während des Füllvorgangs gedehnt. Der notwendige Fülldruck liegt dabei an der Grenze des mit den bekannten Wurstfüllmaschinen Möglichen. Bei einer Handabfüllung ist der Druck so gering, daß sich solche Hüllen vom Wurstbrät lösen ("die Hülle stellt ab") und Falten bilden würden, was die Wurst in den Augen des Verbrauchers "unansehnlich" und "nicht mehr frisch" erscheinen ließe.

Eine einschichtige Wursthülle aus einem Polyamid, das mindestens 5 % seines Gewichts an Wasser aufnehmen kann, ist in der DE-A 32 27 945 (≈ US-A 4 560 520/4 601 929) offenbart. Sie neigt weniger dazu, nach dem Anschneiden weiter aufzureißen, als die aus der DE-A 28 50 182 bekannte Wursthülle. Ausgangsmaterialien für diese Hülle sind insbesondere Polyamid 6 und Polyamid 6,6. Hergestellt wird sie durch Extrudieren, Verstrecken des extrudierten Schlauchs in Längs- und Querrichtung und anschließendes vollständiges Thermofixieren unter kontrollierter Schrumpfung.

Die kontrollierte Schrumpfung beträgt in jeder Richtung 15 % bis etwa 40 %, im Regelfall etwa 20 %. Auch hier muß die Hülle durch erhöhten Druck während des Füllens aufgeweitet werden, wenn sie später faltenfrei bleiben soll.

Die mechanischen Eigenschaften von verstreckten Polyamidhüllen hängen stark von ihrem Wassergehalt ab. Es ist ein Mindestwassergehalt erforderlich, um die Hüllen während des Füllvorgangs ausreichend dehnbar und geschmeidig zu halten. Wasser und Wasserdampf erhöhen aber während des Brühens diesen Wassergehalt so, daß die mechanischen Eigenschaften der Hüllen negativ beeinflußt werden.

Eine einschichtige Hülle auf Polyamidbasis für Koch- und Brühwürste, die auch beim Brühen formstabil bleibt, ist in der EP-A 0 176 980 (= US-A 4 659 599) offenbart. Sie besteht aus einem Gemisch von Polyamid und Polyester. Das Polyamid ist ein gesättigtes, lineares, aliphatisches Polyamid, insbesondere PA 6, der Polyester ein Polyterephthalsäureester und/oder ein Copolyester mit Terephthalsäure- und Isophthalsäure-Einheiten. Durch die Polyester-Beimischung ist die Hülle relativ trüb und zeigt einen unnatürlichen metallischen Glanz. Sie ist zudem nur wenig dehnbar und muß unter vergleichbar hohem Druck gefüllt werden, wenn sie faltenfrei sein soll.

Die einschichtige, biaxial streckorientierte und thermofixierte Wursthülle gemäß der DE-A 39 43 024 (≈ US-A 5 326 613) ist glasklar, schimmert nicht metallisch oder perlmuttartig und zeigt eine hohe Rückstellelastizität. Hergestellt ist sie aus einem Polymerblend bestehend aus Polycaprolactam (= Polyamid 6) und einem aromatischen Copolyamid aus Hexamethylendiamin-, Terephthalsäure- und Isophthalsäure-Einheiten. Auch diese Hülle ist in erster Linie für die maschinelle Abfüllung unter Druck vorgesehen. Sie ist für eine manuelle Abfüllung weniger geeignet, weil sie meist nicht geschmeidig genug ist.

In der EP-A 0 573 306 ist eine schlauchförmige, mehrschichtige, biaxial verstreckte, schrumpffähige Wursthülle beschrieben. Die Hülle enthält eine Schicht aus einem Polymerblend, bestehend aus Polyamid 6 und mindestens 5 Gew.-% eines Copolyamids (z. B. PA 6,12 oder PA 6/69). Diese Schicht ist von anderen Schichten umgeben, speziell von Polyolefinschichten. Die Polyamidschicht ist im Vergleich zu den Polyolefinschichten relativ dünn. Die in der EP-A konkret offenbarten Nahrungsmittelhüllen sind sämtlich sechsschichtig.

Aufgabe der Erfindung ist es, eine raupenförmige vorbefeuchtete Verpackungshülle, insbesondere für Kranzwürste zur Verfügung zu stellen, die auch nach längerer Lagerung weder von Bakterien noch von Schimmel befallen ist und ohne Wässerung sofort maschinell mit Wurstbrät abfüllbar ist.

Diese Aufgabe wird erfindungsgemäß in der Weise gelöst, daß die Sprühlösung eine Bakterizid sowie Kaliumsorbat und Milchsäure in einer Menge enthält, daß der pH-Wert der Sprühlösung kleiner oder gleich 6 ist, daß die Raffdichte bis zu 1:200 und die Länge der gerafften Raupe 40 bis 100 cm beträgt und die Raupe einen Außendurchmessser von 25 bis 90 mm und einen Innendurchmesser von 12 bis 45 mm aufweist.

Die Festigkeit der Hülle darf während des Brühens (dies geschieht in der Praxis bei einer Temperatur von etwa 80 °C) nicht so weit abnehmen, daß sie platzt oder einreißt. Beim Abkühlen muß die Hülle mit dem Inhalt schrumpfen, ohne abzustellen oder gar Falten zu bilden. Dadurch wird gleichzeitig verhindert, daß sich Wurstgelee unter der Hülle ansammelt. Sie soll zudem immer soviel Spannung haben, daß die Wurst einen prallen und frischen Eindruck macht. Sie soll ausreichend geschmeidig sein und einen weichen Griff haben, damit sie auch für die manuelle Abfüllung der Wurst (bei einem gegenüber dem maschinellen Füllen verminderten Druck) geeignet ist. Der zum Verschließen der Wurstenden üblicherweise verwendete Metallclip soll auf der Hülle möglichst rutschfest sitzen, d.h. die Hülle soll eine hohe Reibung gegenüber Metall aufweisen. Die Hülle soll für Wasserdampf und Sauerstoff wenig durchlässig sein, um den Gewichtsverlust während der Lagerung gering zu halten und einem Verderb durch Oxidation vorzubeugen. Die Hülle ist im allgemeinen durch Farbpigmente bzw. Farbstoffe gefärbt, sie kann aber auch transparent sein und einen ansprechenden Glanz haben, da Würste in einer trüben oder milchigen Hülle vom Verbraucher wenig geschätzt werden. Sie soll schließlich aus preiswerten Rohstoffen einfach herstellbar sein.

Die Weiterbildung der raupenförmigen Verpackungshülle ergibt sich aus den Merkmalen der Ansprüche 2 bis 5. In bevorzugter Weise enthält das Schlauchmaterial eine Polymermischung aus Polyamid 6 und 10 bis 90 Gew.-% eines Copolyamids aus Hexamethylendiamin-, Isophthalatsäure- und Terephthalsäure-Einheiten. Insbesondere enthält das Schlauchmaterial eine Polymermischung aus Polyamid 6 und 10 und bis 30 Gew.-% eines Copolyamids.

In weiterer Ausgestaltung der Erfindung besteht das Schlauchmaterial aus
a) Polyamid 6,
b) 5 bis 50 Gew.-%, bezogen auf das Gesamtgewicht aller Polymere in der Schicht, eines
   b₁) aliphatischen Copolyamids mit Einheiten der Formeln -NH-[CH₂]₅-CO- und -NH-[CH₂]ₘ-CO-, wobei m eine ganze Zahl von 7 bis 11 ist, und/oder eines
   b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
   gegebenenfalls
c) bis zu 20 Gew.-% eines amorphen Copolyamids mit Hexamethylendiamin-, Terephthalsäure- und Isophthalsäure-Einheiten
   und gegebenenfalls
d) bis zu 20 Gew.-% eines mit Carboxygruppen modifizierten Polyolefins.

Die Summe der Gewichtsprozente der Komponenten a) bis d) ist gleich 100, wenn keine der weiter unten genannten Bestandteile hinzugefügt werden.

Das molare Verhältnis der Einheiten der Formel -NH-[CH₂]₅-CO- zu denen der Formel -NH-[CH₂]ₘ-CO- in dem aliphatischen Copolyamid b₁) beträgt bevorzugt von 95:5 bis 20:80, besonders bevorzugt von 60:40 bis 30:70. Das molare Verhältnis der Einheiten der Formel -NH-[CH₂]₅-CO- zu denen der Formeln -NH-[CH₂]ₙ-NH- und -CO-[CH₂]ₒ-CO- in den aliphatischen Copolyamiden b₂) beträgt bevorzugt von 95:5 bis 25:75, besonders bevorzugt von 70:30 bis 30:70. Die Einheiten der Formeln -NH-[CH₂]ₙ-NH- und -CO-[CH₂]ₒ-CO- liegen dabei in praktisch äquimolaren Mengen vor.

In den aliphatischen Copolyamiden b₁) ist m bevorzugt 7 oder 11, d.h. die Einheiten der Formel -NH-[CH₂]ₘ-CO- sind bevorzugt solche aus 8-Amino-octansäure (= 8-Amino-caprylsäure) oder 12-Amino-dodecansäure (= 12-Amino-laurinsäure).

In den aliphatischen Copolyamiden b₂) ist n bevorzugt 6 und o bevorzugt 7, 8 oder 10, d.h. die Einheiten der Formel -NH-[CH₂]ₙ-NH- sind bevorzugt solche aus Hexan-1,6-diyldiamin (= Hexamethylendiamin) und die Einheiten der Formel -CO-[CH₂]ₒ-CO- sind bevorzugt solche aus Nonandisäure (= Azelainsäure), Decandisäure (= Sebacinsäure) oder Dodecandisäure. Das Copolyamid aus Hexamethylendiamin und Azelainsäure wird allgemein als Polyamid 69 (oder Polyamid 6,9), das aus Hexamethylendiamin und Sebacinsäure als Polyamid 610 (oder Polyamid 6,10) und das aus Hexamethylendiamin und Dodecandisäure als Polyamid 612 (oder Polyamid 6,12) bezeichnet. Das Copolyamid mit Einheiten aus e-Caprolactam, Hexamethylendiamin und Azelainsäure wird schließlich als Polyamid 6/69 bezeichnet. Hüllen, die die Komponente b₂) enthalten, zeigen eine besonders gute Transparenz.

Der Anteil der Komponente b) beträgt bevorzugt 10 bis 30 Gew.-%, der des - durch die Terephthalsäure- und Isophthalsäure-Einheiten teilweise aromatischen - amorphen Copolyamids c) bevorzugt 5 bis 15 Gew.-%, jeweils bezogen auf das Gesamtgewicht aller Polymere in der Schicht. Copolyamide mit Hexamethylendiamin- und Terephthalsäure- bzw. Isophthalsäure-Einheiten werden abgekürzt als PA 6-T bzw. PA 6-1 bezeichnet.

Das mit Carboxygruppen modifizierte Polyolefin d) ist bevorzugt ein Copolymer mit Einheiten aus Ethylen und (Meth)acrylsäure. (Meth)acrylsäure steht dabei für Acrylsäure und Methacrylsäure. Die (Meth)acrylsäure-Einheiten haben darin bevorzugt einen Anteil 2 bis 25 Gew.-%. Der Anteil der Komponente d) beträgt bevorzugt ebenfalls 5 bis 15 Gew.-%, wiederum bezogen auf das Gesamtgewicht der Polymeren in der Schicht. Vor allem die Komponenten c) und d) bewirken die verringerte Durchlässigkeit der Hülle für Sauerstoff und Wasserdampf.

Die erfindungsgemäße Verpackungshülle enthält im allgemeinen noch Farbstoffe, Pigmente und/oder Verarbeitungshilfsmittel. Der Anteil dieser Bestandteile ist relativ gering, so daß die wesentlichen Eigenschaften der Verpackungshülle dadurch praktisch unbeeinflußt bleiben.

In einer Ausführungsform enthält die erfindungsgemäße Verpackungshülle 40 bis 80 Gew.-% der Komponente a), 10 bis 30 Gew.-% der Komponente b) und jeweils 5 bis 15 Gew.-% der Komponenten c) und d). Das optimale Verhältnis der Komponenten richtet sich auch nach dem Durchmesser der Verpackungshülle, ihrer Wandstärke und der Art der Verwendung.

Die raupenförmige Verpackungshülle hat im Vergleich zu einer Hülle aus reinem Polyamid 6 eine wesentlich höhere Geschmeidigkeit und einen besseren "Griff". Sie umschließt die gebrühten Würste nach dem Erkalten wesentlich straffer als bisher gewohnt, obwohl die Schrumpfspannung (gemessenen in Querrichtung in trockenem Zustand bei 100 °C) gegenüber herkömmlichen Hüllen verringert ist.

Die raupenförmige Verpackungshülle enthält erfindungsgemäß mehr als eine Schicht wie sie voranstehend beschrieben ist. Insbesondere sind zwei bis fünf derartige Schichten für das Schlauchmaterial vorgesehen.

Erfindungsgemäß ist ein Verfahren zur Herstellung einer ein- oder mehrschichtigen Verpackungshülle vorgesehen. Bei diesem Verfahren werden die Komponenten, die die Hülle bzw. die einzelnen Schichten der Hülle bilden, in eine homogene Schmelze überführt. Die Schmelze wird durch eine oder mehrere Ringdüsen extrudiert und dabei zu einem nahtlosen Schlauch geformt, der anschließend in Längs- und Querrichtung verstreckt wird. Bei dem Verfahren wird mindestens eine Schicht der Verpackungshülle aus dem obengenannten Polymerblend hergestellt und wird die Verpackungshülle vor dem Raffen zu einer Raupe mit einer Sprühlösung, die einen Emulgator, Kaliumsorbat, Milchsäure und ein Bakterizid enthält, behandelt. Das Mischen und Aufschmelzen kann in einem separaten Mischextruder erfolgen. Die durch Extrusion hergestellte nahtlose Schlauchfolie wird allgemein durch den Druck eines innen eingefüllten Gases (im Normalfall Luft) und durch Anlegen einer Zugspannung in Längsrichtung (z.B. durch ein Rollenpaar) in Längs- und Querrichtung verstreckt. Dieses als "Blasformen" bezeichnete Verfahren ist dem Fachmann allgemein bekannt. Durch das Verstrecken erlangt die Hülle eine wesentlich höhere Festigkeit. Um die unter Wärmeeinwirkung eintretende Schrumpfung zu verringern, wird die Schlauchfolie durch eine zusätzliche Wärmebehandlung teilfixiert ("Thermofixierung"). Die fertige Verpackungshülle zeigt allgemein in 80 °C heißem Wasser eine Schrumpfung von 5 bis 25 % in Längs- und Querrichtung. Die Dicke der verstreckten und thermofixierten Verpackungshülle beträgt allgemein 10 bis 50 µm, bevorzugt 25 bis 45 µm.

Für spezielle Anwendungen ist die erfindungsgemäße Verpackungshülle auch mehrschichtig. Sie ist dann dadurch gekennzeichnet, daß sie mindestens eine Schicht aus dem oben angegebenen Polyamidblend enthält. Die weiteren Schichten bestehen bevorzugt aus Polyamiden (z. B. Polyamid 6), Polyamidmischungen, Polyolefinen wie Polyethylen oder Polypropylen, aber auch aus Polyolefinen, die mit haftvermittelnden funktionellen Gruppen ausgestattet sind, Copolymeren mit Einheiten aus ethylenisch ungesättigten Monomeren (z. B. Vinylacetat, Vinylalkohol, Acryl- und Methacrylsäure) sowie Vinylidenchlorid- oder Acrylnitril-Copolymeren, lonomerharzen oder Mischungen der vorgenannten Polymeren.

Die erfindungsgemäße Mehrschichthülle besteht normalerweise aus 2 bis 5 Schichten. Vorzugsweise folgen der Schicht aus dem angegebenen Polyamidblend alternierend weitere Schichten vom Typ Polyolefin und Polyamid. Hergestellt wird eine solche Hülle durch Coextrusion mit Hilfe von Ringdüsen, die entsprechend der Zahl der Schichten speziell konstruiert sind. Dies bedeutet allerdings einen erheblich höheren technischen Aufwand.

Anschließend kann die ein- oder mehrschichtige Verpackungshülle mit einem Aufdruck versehen, abschnittsweise zu Raupen gerafft oder in kleinere, einseitig abgebundene Stücke zerschnitten werden. Die kurzen, einseitig abgebundenen Stücke werden bei der manuellen Herstellung der Wurst verwendet, während die Raupen bei der maschinellen Herstellung von Würsten, insbesondere von Kranzwürsten, eingesetzt werden.

Die Raupen können dabei ohne vorangehende Wässerung auf ein Füllrohr einer Abfüllmaschine für das Wurstbrät aufgeschoben werden. Die Länge der Raupe liegt im Bereich von 40 bis 100 cm, was bei einer Raffdichte bis zu 1:200 bedeutet, daß die Länge der ungerafften Verpackungshülle bis zu 200 m beträgt. Das Kaliber der ungerafften Verpackungshülle liegt im Bereich von 20 bis 68 mm, insbesondere beträgt es 45 mm. Die Verpackungshülle ist als Kranzhülle für Kranzwürste ausgelegt, die einen Innendurchmesser von 160 bis 180 mm haben. Durch geläufige Vefahrensmaßnahmen wird erreicht, daß sich beim Abfüllen die Verpackungshülle abschnittsweise zu einem Kranz kringelt.

Der Außendurchmesser der raupenförmigen Verpackungshülle beträgt 25 bis 90 mm und der Innendurchmesser 12 bis 45 mm. Die vor dem Raffen der Verpackungshülle aufgebrachte Sprühlösung enthält beispielsweise Kaliumsorbat und Milchsäure, deren Konzentrationen in Gew.-% so gewählt wird, daß die Sprühlösung einen pH-Wert kleiner oder gleich 6 hat. Der Sprühlösung wird ferner ein Bakterizid mit ca. 0,1 bis 0,3 Gew.-% sowie ein Gleitmittel zugesetzt. Zusätzlich wird z. B. Glycerin mit 2 bis 25 Gew.-% der Sprühlösung beigefügt. Ebenso ist als Zusatz für die Sprühlösung eine Öl/Wasseremulsion mit einem Emulgator als oberflächenaktive Substanz vorgesehen, bei der es sich beispielsweise um einen Sorbitfettsäureester handelt. Als Öl wird u. a. ein Triglycerid verwendet. Die Konzentrationen dieses Zusatzes liegt im Bereich von 5 bis 10 Gew.-%. In den nachfolgenden Beispielen und Vergleichsbeispielen werden die ungerafften Verpackungshüllen miteinander verglichen, wobei Gt für Gewichtssteile steht.

### Beispiele 1 bis 3

Aus Dryblendmischungen von 90 Gew.-% Polyamid PA 6 (Ultramid B4) und 10 Gew.-% Copolyamid PA 6I/6T (Grivory G21) im Beispiel 1, 85 Gew.-% Polyamid PA 6 und 15 Gew.-% Copolyamid PA 6I/6T im Beispiel 2 und 80 Gew.-% PA 6 und 20 Gew.-% PA 6I/6T im Beispiel 3 wird in einem Einschneckenextruder bei 235 °C eine homogene Schmelze plastifiziert und über eine Ringdüse zu einem Vorschlauch von 19 mm Durchmesser und 0,30 mm Wandstärke durch Kühlung abgeschreckt. Anschließend wird dieser Schlauch erwärmt und innerhalb der Streckzone simultan biaxial verstreckt. Dabei werden folgende Streckverhältnisse eingehalten:

| | |
|---|---|
| Querstreckverhältnis | 1:3,3 |
| Längsstreckverhältnis | 1:2,6 |

Auf diese Weise werden Schlauchfolien von 63 mm Durchmesser mit einer Wandstärke von 0,035 mm erhalten.

Die Hüllen werden in einem weiteren Verfahrensschritt mit Hilfe einer weiteren Blase unter Vermeidung eines Längs- und Querschrumpfes thermofixiert. Diese so erhaltenen Verpackungshüllen sind unter 80 °C nicht bzw. kaum mehr schrumpffähig, jedoch weiterreißfest, so daß sie zu Raupen gerafft werden können.

Derartige Verpackungshüllen umhüllen die daran abgefüllte Wurst über eine Kühllagerdauer von 6 Wochen faltenfrei. Nach dieser Zeit ist an der Wurstoberfläche noch keine Vergrauung eingetreten. Geleeabsatz ist nicht vorhanden; beim Schälen der Würste ist ein Anhaften des Wurstgutes an der Folie zu verzeichnen.

### Beispiel 4

Ein Gemisch aus

| | |
|---|---|
| 80 Gt | Polyamid 6 (die relative Viskosität einer 1 Gew.-%igen Lösung des Polyamids in 96 %iger Schwefelsäure bei 20 °C beträgt 4) |
| 10 Gt | Polyamid 6/69 (^{(R)}Grilon CF62BS der Ems-Chemie AG) (Schmelzvolumenindex: 40 ml in 10 min bei 190 °C und 10 kg Belastung) und |
| 10 Gt | Ethylen/Methacrylsäure-Copolymer (^{(R)}Nucrel 0903 HC der DuPont de Nemours Inc.) (Schmelzindex: 2,5 g in 10 min bei 190 °C und 2,16 kg Belastung) |

wurde in einem Einschnecken-Extruder bei 240 °C zu einer homogenen Schmelze plastifiziert und durch eine Ringdüse zu einem Schlauch von 18 mm Durchmesser extrudiert. Der Polymerschlauch wurde zunächst schnell abgekühlt, dann auf die zum Verstrecken erforderliche Temperatur erwärmt, nach dem Blasformverfahren verstreckt und schließlich thermofixiert, wobei das Streckverhältnis in Längs- und Querrichtung unverändert bleibt. Das Flächenstreckverhältnis betrug 9,6. Der Schlauch hatte einen Durchmesser im Bereich von 66 bis 68 mm.

### Beispiel 5

Ein Gemisch aus

| | |
|---|---|
| 70 Gt | Polyamid 6 (wie im Beispiel 4), |
| 10 Gt | Polyamid 6/69 (wie im Beispiel 4), |
| 10 Gt | amorphes Polyamid 6-I/6-T (^{(R)}Selar PA 3426 der DuPont de Nemours Inc.) (Schmelzindex: 90 g in 10 min bei 275 °C und einer Belastung von 10 kg) und |
| 10 Gt | Ethylen/Methacrylsäure-Copolymer (wie im Beispiel 4) |

wurden wie im Beispiel 4 beschrieben zu einer verstreckten und thermofixierten Verpackungshülle verarbeitet. Die Dimensionen der Hülle waren ebenfalls identisch mit denjenigen des Beispiels 4. Ebenso wurde ein Schlauch von 12 mm Durchmesser extrudiert und im Verhältnis 1:1,66 querverstreckt und anschließend längsgestreckt, so daß eine ungeraffte Verpackungshülle mit einem Kaliber von 20 mm erhalten wurde.

### Beispiel 6

Ein Gemisch aus

| | |
|---|---|
| 60 Gt | Polyamid 6 (wie im Beispiel 4), |
| 20 Gt | Polyamid 6/69 (wie im Beispiel 4), |
| 10 Gt | amorphes Polyamid 6-I/6-T (wie im Beispiel 5) und |
| 10 Gt | Ethylen/Methacrylsäure-Copolymer (wie im Beispiel 4) |

wurde wie beschrieben zu einer biaxial verstreckten und thermofixierten Verpackungshülle verarbeitet. Auch hier waren die Dimensionen des Produkts identisch.

### Beispiel 7

Ein Gemisch aus

| | |
|---|---|
| 50 Gt | Polyamid 6 (wie im Beispiel 4), |
| 30 Gt | Polyamid 6/69 (wie im Beispiel 4), |
| 10 Gt | amorphes Polyamid 6-I/6-T (wie im Beispiel 5) und |
| 10 Gt | Ethylen/Methacrylsäure-Copolymer (wie im Beispiel 4) |

wurde wie beschrieben zu einer biaxial verstreckten und thermofixierten Verpackungshülle verarbeitet. Das Flächenstreckverhältnis betrug wiederum 9,6 und der Durchmesser der fertigen Verpackungshülle 66 mm. Aus dem gleichen Gemisch wurde ein Schlauch mit einem Durchmesser von 15 mm extrudiert und mit einem Flächenstreckverhältnis 9,0 verstreckt. Der Durchmesser der fertigen ungerafften Verpackungshülle betrug 45 mm, ein bevorzugtes Kaliber der Verpackungshülle.

### Beispiel 8

Ein Gemisch aus

| | |
|---|---|
| 65 Gt | Polyamid 6 (wie im Beispiel 4), |
| 15 Gt | Polyamid 612 (^{(R)}Grilon CF6S der Ems-Chemie AG) (Schmelzindex: 50 g in 10 min bei 190 °C und einer Belastung von 10 kg), |
| 10 Gt | amorphes Polyamid 6-I/6-T (wie im Beispiel 5) und |
| 10 Gt | Ethylen/Methacrylsäure-Copolymer (wie im Beispiel 4) |

wurde wie beschrieben zu einer biaxial verstreckten und thermofixierten Verpackungshülle verarbeitet. Das Flächenstreckverhältnis betrug 9,2, der Durchmesser der fertigen Verpackungshülle 63 mm.

### Beispiel 9

Ein Gemisch aus

| | |
|---|---|
| 50 Gt | Polyamid 6 (wie im Beispiel 4), |
| 30 Gt | Polyamid 612 (wie im Beispiel 8), |
| 10 Gt | amorphes Polyamid 6-I/6-T (wie im Beispiel 5) und |
| 10 Gt | Ethylen/Methacrylsäure-Copolymer (wie im Beispiel 4) |

wurde wie beschrieben zu einer biaxial verstreckten und thermofixierten Verpackungshülle verarbeitet. Das Flächenstreckverhältnis betrug ebenfalls 9,2 und der Durchmesser der fertigen Verpackungshülle 63 mm.

### Beispiel 10

Zur Herstellung einer mehrschichtigen Verpackungshülle wurden folgende Polymergemische verwendet:
Gemisch A:

| | |
|---|---|
| 80 Gt | Polyamid 6 (wie im Beispiel 4), |
| 10 Gt | amorphes Polyamid 6-I/6-T (wie im Beispiel 5) und |
| 10 Gt | Polyamid 6/6,9 (wie im Beispiel 4) |

Gemisch B:

| | |
|---|---|
| 70 Gt | Polyethylen niederer Dichte (^{(R)}Lupolen 1441D der BASF AG) mit einem Schmelzindex von 0,2 g in 10 mm bei 190 °C und 2,16 kg Belastung und |
| 30 Gt | eines linearen Polyethylens niederer Dichte (LLDPE), das durch Modifizierung mit Maleinsäureanhydrid haftvermittelnd gegenüber Polyamid ausgerüstet ist (^{(R)}Escor CTR 2000 von Exxon) mit einem Schmelzindex von 3 g in 10 mm bei 190 °C und 2,16 kg Belastung |

Gemisch C:

| | |
|---|---|
| 85 Gt | Polyamid 6 (wie im Beispiel 4), |
| 15 Gt | amorphes Polyamid 6-I/6-T (wie im Beispiel 5) |

Diese Gemische wurden in drei Einschnecken-Extrudern bei jeweils 240 °C zu homogenen Schmelzen plastifiziert, anschließend in einer 3-Schicht-Ringdüse zusammengeführt und zu einem Schlauch von 18 mm Durchmesser coextrudiert. Dieser Schlauch wurde wie beschrieben zu einer biaxial verstreckten und thermofixierten Verpackungshülle verarbeitet. Das Flächenstreckverhältnis betrug 9,6 und der Durchmesser der fertigen Verpackungshülle 66 mm. Bei einer Gesamtfolienstärke von 55 µm wiesen die Schichten folgende Dicken auf:

| | |
|---|---|
| Außenschicht (Gemisch A) | 30 µm |
| Mittelschicht (Gemisch B) | 20 µm |
| Innenschicht (Gemisch C) | 5 µm |

Für die Beispiele 1 bis 10 gilt ganz allgemein, daß der Durchmesser des extrudierten Schlauches 12 bis 20 mm betragen kann, je nach dem Durchmesser der verwendeten Ringdüse für die Schlauchextrusion und daß durch die Wahl des Flächenstreckverhäitnisses im Bereich von 3,3 bis 9,6 die biaxial verstreckte, thermofixierte, ungeraffte Verpackungshülle einen Durchmesser im Bereich von 20 bis 68 mm hat.

### Vergleichsbeispiel 1

Das gleiche wie in den Beispiel 1 bis 3 angegebene PA 6 (Ultraamid B4) mit 100 Gew.-% wird unter den dort angegebenen Bedingungen extrudiert, biaxial verstreckt und thermofixiert.

Die so erhaltene Verpackungshülle zeigt eine hohe Wasserdampfdurchlässigkeit. Eine darin abgefüllte Wurst ist bereits nach dreiwöchiger Kühllagerung faltig und an der Oberfläche vergraut (mangelnde Sauerstoffbarriere).

### Vergleichsbeispiel 2

Das gleiche wie in den Beispielen 1 bis 3 angegebene PA 6 (Ultramid 4) wird im Verhältnis 85:15 mit einem PA 6-3T (Trogamid T) zum Dryblend gemischt und unter den dort angegebenen Bedingungen extrudiert, biaxial verstreckt und thermofixiert.

Die so erhaltene Verpackungshülle zeigt im Vergleich mit den erfindungsgemäßen Hüllen zwar ebenfalls gute mechanische Festigkeiten und sogar bessere Trübungswerte; sie baut im Wurstherstellungsprozeß jedoch eine so geringe Restspannung auf, daß die Wurst bereits nach dem Auskühlen faltig und damit nicht verkaufsfähig ist. Zusätzlich ist das unerwünschte Aussaften des Brätes (Gallertebildung) zu verzeichnen.

### Vergleichsbeispiel 3

Anstelle des Homopolyamids PA 6 wird in dieser Versuchseinstellung ein Copolyamid PA 6/69 (Grilon XE 322, Fa. EMS-Chemie) mit PA 6I/6T (Grivory G21) im Verhältnis 85:15 gemischt und unter den in Beispiel 1 angegebenen Bedingungen extrudiert. Im Gegensatz zu den vorausgegangenen Beispielen und Vergleichsbeispielen ist damit kein stabil ablaufender Schlauchstreckprozeß möglich, was u. a. in der großen Flachbreitenschwankung und der Ungleichmäßigkeit der Wandstärke zum Ausdruck kommt.

Ferner ist im Vergleich zu den anderen Beispielen die spezielle Festigkeit vermindert. Die erhaltenen Schlauchstücke weisen eine höhere Reißdehnung und einen verringerten σ₅-Wert auf (schlechtere Kalibiertreue). Ein solches Blend ist zur Realisiserung einer biaxial streckorientierten, industriell verwendbaren Wursthülle nicht geeignet.

### Vergleichsbeispiel 4

Das reine Polyamid 6 aus Beispiel 4 wurde wie dort beschrieben zu einer Verpackungshülle verarbeitet. Das Flächenstreckverhältnis betrug 9,0.

### Vergleichsbeispiel 5

Ein Gemisch aus

| | |
|---|---|
| 80 Gt | Polyamid 6 (wie im Beispiel 4), |
| 10 Gt | amorphes Polyamid 6-I/6-T (wie im Beispiel 5) und |
| 10 Gt | Ethylen/Methacrylsäure-Copolymer (wie im Beispiel 4) |

wurde gemäß Beispiel 4 zu einer verstreckten und thermofixierten Verpackungshülle verarbeitet. Das Streckverhältnis betrug 9,0 und der Durchmesser der fertigen Verpackungshülle 61 mm.

### Vergleichsbeispiel 6

Eine einschichtige Wursthülle gemäß DE-C 28 50 181 mit einem Nenndurchmesser von 60 mm (^{(R)}Betan des Naturin-Werks Becker & Co.) wurde analog verarbeitet und gemessen.

### Vergleichsbeispiel 7

Eine einschichtige Wursthülle gemäß DE-C 28 50 182 mit einem Nenndurchmesser von 60 mm (^{(R)}Optan des Naturin-Werks Becker & Co.) wurde analog verarbeitet und gemessen.

Die Meßwerte der Beispiele 4 bis 10 und der Vergleichsbeispiele V4 bis V7 in der folgenden Tabelle beweisen die Überlegenheit der erfindungsgemäßen Hüllen gegenüber dem Stand der Technik.

Erklärung der Fußnoten:
1) Die Reißspannung wurde nach DIN 53455 an 30 min lang gewässerten Streifen von 15 mm Breite und einer Einspannlänge von 50 mm gemessen.
2) Hier wurde die prozentuale Zunahme des äußeren Umfangs von Schlauchabschnitten ermittelt, die man zuvor 30 min lang gewässert und anschließend bis zum Erreichen des angegebenen Innendrucks aufgeblasen hatte.
3) Die Hülle wurde einseitig mit Luft einer relativen Feuchte (r.H.) von 85 % bei 20 °C beaufschlagt. Die Messung der Wasserdampfdurchlässigkeit erfolgte nach DIN 53122.
4) Die 02-Durchlässigkeit wurde nach DIN 53380 bei 53 % r.H. und 23 °C gemessen.
5) Beurteilt wurde eine 30 min lang gewässerte Hülle nach subjektivem Empfinden. Die angegebenen Zahlen haben folgende Bedeutung: 1 = extrem weich, 2 = sehr weich, 3 = weich und 4 = mittel.
6) Dimensionsänderung nach 15 min Lagerung in Wasser bei 80 °C.
7) Die Schrumpfspannung wurde an trockenen Streifen von 15 mm Breite gemessen, die 3 min bei 100 °C und 0 % r.H. zwischen zwei Meßklemmen im Abstand von 100 mm eingespannt waren. Dieser Abstand blieb unverändert.
8) Die Hülle wurde per Hand mit feinkörnigem Brühwurst-Brät bei konstantem Fülldruck abgefüllt und mit Metallclips verschlossen. Anschließend wurden die Würste in einem Brühschrank 60 min bei 78 °C und 100 % r.H. gegart. Nach ihrem Abkühlen auf 7 °C wurden Aussehen und Konsistenz beurteilt.

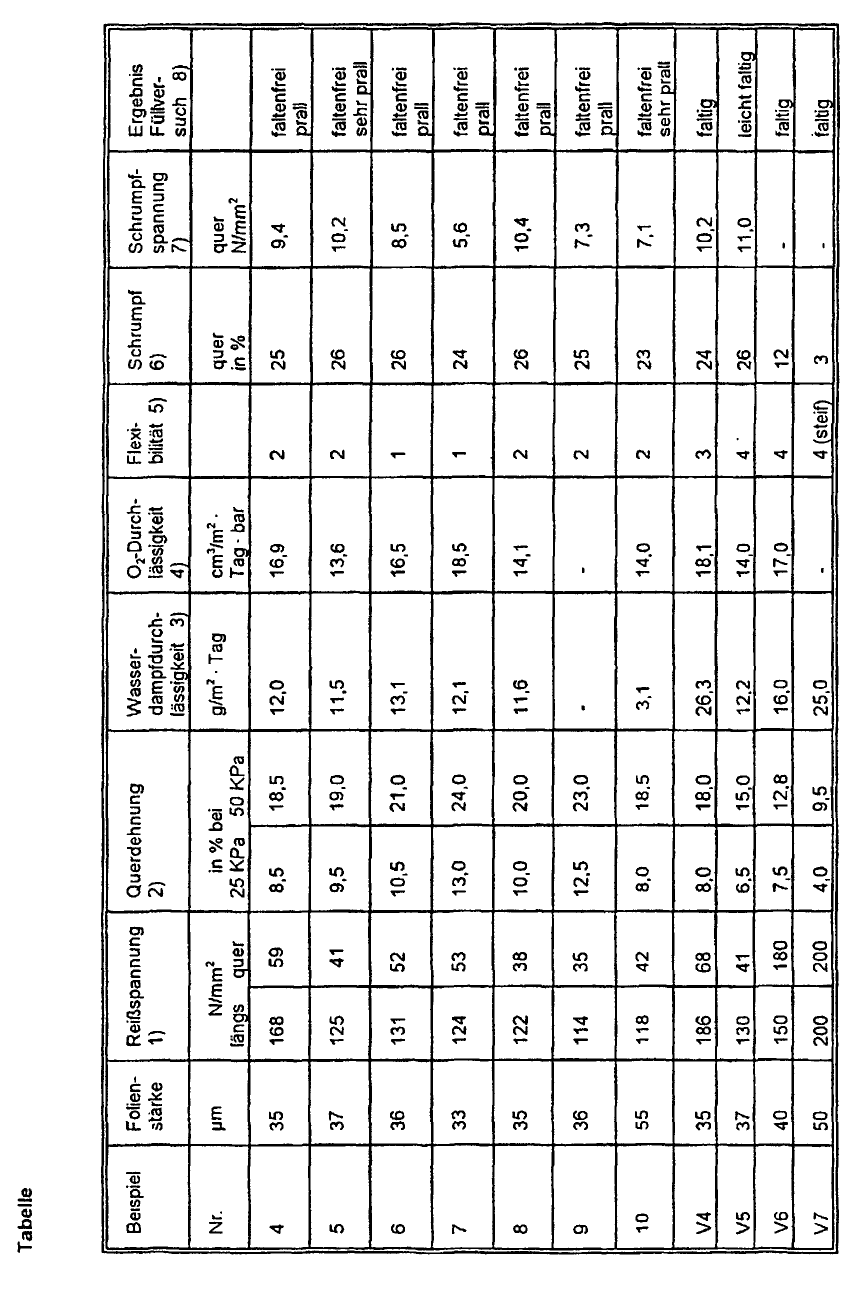

## Patentansprüche

1. Raupenförmige Verpackungshülle auf der Basis von Polymerblends, insbesondere eine künstliche Wursthülle auf der Basis von Polyamid, die aus biaxial streckorientiertem und thermofixiertem Schlauchmaterial gerafft ist, wobei auf das Schlauchmaterial vor dem Raffen eine Sprühlösung aufgetragen ist, die einen Emulgator enthält, **dadurch gekennzeichnet, dass** die Sprühlösung ein B akterizid sowie Kaliumsorbatund Milchsäure in einer Menge enthält, dass der pH-Wert der Sprühlösung kleiner oder gleich 6 ist, dass die Raffdichte bis zu 1 : 200 und die Länge der gerafften Raupe 40 bis 100 cm beträgt und dass die Raupe einen Außendurchmesser von 25 bis 90 mm und einen Innendurchmesser von 12 bis 45 mm aufweist.

2. Raupenförmige Verpackungshülle nach Anspruch 1, **dadurch gekennzeichnet, daß** der Konzentrationsbereich der Inhaltsstoffe der Sprühlösung 2 bis 25 %, insbesondere 5 bis 10 Gew.-% beträgt.

3. Raupenförmige Verpackungshülle nach Anspruch 1, **dadurch gekennzeichnet, dass** das Bakterizid mit einer Konzentration von 0,1 bis 0,3 Gew.-%, bezogen auf die Sprühlösung, und ein Gleitmittel der Sprühlösung zugesetzt sind.

4. Raupenförmige Verpackungshülle nach Anspruch 3, **dadurch gekennzeichnet, daß** die Sprühlösung eine Öl/Wasseremulsion mit einem Emulgator enthält, der auf Basis von Sorbitfettsäureester aufbaut, daß das Öl ein Triglycerid ist und daß die Öl/Wasseremulsion 5 bis 10 Gew.-% der Sprühlösung beträgt.

5. Raupenförmige Verpackungshülle nach Anspruch 1, **dadurch gekennzeichnet, daß** das Schlauchmaterial im ungerafften Zustand ein Kaliber von 20 bis 68 mm, insbesondere von 45 mm hat und sich beim Abfüllen mit Wurstbrät zu einer Kranzhülle für Kranzwürste kringelt.

6. Raupenförmige Verpackungshülle nach Anspruch 1, **dadurch gekennzeichnet, daß** das Schlauchmaterial eine Polymermischung von Polyamid 6 und 10 bis 90 Gew.-% eines Copolyamids aus Hexamethylendiamin-, Isophthalsäure- und Terephthalsäure-Einheiten enthält.

7. Raupenförmige Verpackungshülle nach Anspruch 6, **dadurch gekennzeichnet, daß** das Schlauchmaterial eine Polymermischung aus Polyamid 6 und 10 bis 30 Gew.-% eines Copolyamids enthält.

8. Raupenförmige Verpackungshülle nach Anspruch 1, **dadurch gekennzeichnet, daß** das Schlauchmaterial aus
a) Polyamid 6,
b) 5 bis 50 Gew.-%, bezogen auf das Gesamtgewicht aller Polymere in der Schicht, eines
b₁) aliphatischen Copolyamids mit Einheiten der Formeln -NH-[CH₂]₅-CO- und -NH-[CH₂]ₘ-CO-, wobei m eine ganze Zahl von 7 bis 11 ist, und/oder eines
b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
gegebenenfalls
c) bis zu 20 Gew.-% eines amorphen Copolyamids mit Hexamethylendiamin-, Terephthalsäure- und lsophthalsäure-Einheiten
und gegebenenfalls
d) bis zu 20 Gew.-% eines mit Carboxygruppen modifizierten Polyolefins
besteht.

9. Raupenförmige Verpackungshülle nach Anspruch 8, **dadurch gekennzeichnet, daß** das molare Verhältnis der Einheiten der Formel -NH-[CH₂]₅-CO- zu den Einheiten der Formel -NH-[CH₂]ₘ-CO- in dem aliphatischen Copolyamid b₁) von 95:5 bis 20:80, bevorzugt von 60:40 bis 30:70 beträgt.

10. Raupenförmige Verpackungshülle nach Anspruch 8 oder 9, **dadurch gekennzeichnet, daß** das molare Verhältnis der Einheiten der Formel -NH-[CH₂]₅-CO- zu den Einheiten der Formeln -NH-[CH₂]ₙ-NH- und -CO-[CH₂]ₒ-CO- in den aliphatischen Copolyamiden b₂) von 95:5 bis 25:75, bevorzugt von 70:30 bis 30:70 beträgt.

11. Raupenförmige Verpackungshülle nach einem oder mehreren der Ansprüche 8 bis 10, **dadurch gekennzeichnet, daß** in den aliphatischen Copolyamiden b₁) m = 7 oder 11 ist.

12. Raupenförmige Verpackungshülle nach einem oder mehreren der Ansprüche 9 bis 12, **dadurch gekennzeichnet, daß** in den aliphatischen Copolyamiden b₂) n = 6 und o = 7, 8 oder 10 ist.

13. Raupenförmige Verpackungshülle nach einem oder mehreren der Ansprüche 8 bis 12, **dadurch gekennzeichnet, daß** der Anteil der Komponente b) 10 bis 30 Gew.-%, der der Komponente c) 5 bis 15 Gew.-%, und der der Komponente d) ebenfalls 5 bis 15 Gew.-%, jeweils bezogen auf das Gesamtgewicht aller Polymere in der Schicht, beträgt.

14. Raupenförmige Verpackungshülle nach einem oder mehreren der Ansprüche 8 bis 13, **dadurch gekennzeichnet, daß** das mit Carboxygruppen modifizierte Polyolefin d) ein Copolymer mit Einheiten aus Ethylen und (Meth)acrylsäure ist.

15. Raupenförmige Verpackungshülle, **dadurch gekennzeichnet, daß** sie mehr als eine Schicht gemäß einem oder mehreren der Ansprüche 8 bis 14 enthält.

16. Raupenförmige Verpackungshülle nach Anspruch 15, **dadurch gekennzeichnet, daß** der Schicht aus dem angegebenen Polyamidblend alternierend weitere Schichten vom Typ Polyolefin und Polyamid folgen.

17. Verfahren zur Herstellung eine ein- oder mehrschichtigen Verpackungshülle durch Überführen der die Hülle bzw. die einzelnen Schichten der Hülle bildenden Komponenten in eine homogene Schmelze, Extrudieren der Schmelze durch eine oder mehrere Ringdüsen unterBildung eines nahtlosen Schlauchs, anschließendes Verstrecken der Hülle in Längs- und Querrichtung sowie Thermofixieren, **dadurch gekennzeichnet, dass** mindestens eine Schicht der Verpackungshülle aus dem Polymerblend gemäß einem oder mehreren der Ansprüche 8 bis 16 hergestellt wird und dass die Verpackungshülle vor dem Raffen zu einer Raupe mit einer Sprühlösung, die einen Emulgator, Kaliumsorbat, Milchsäure und ein Bakterizid enthält, behandelt wird.

18. Verwendung der raupenförmigen Verpackungshülle nach einem oder mehreren der Ansprüche 8 bis 16 für Kranzwürste, wobei die Verpackungshülle ohne Wässerung auf ein Füllrohr für das Wurstbrät aufschiebbar ist.

## Claims

1. A concertinaed packaging casing based on polymer blends, in particular an artificial, polyamide-based sausage casing which has been shirred from biaxially stretch-oriented and thermofixed tube material, whereby a spray solution containing an emulsifier has been applied to the tube material before the shirring, wherein the spray solution contains a bactericide as well as potassium sorbate and lactic acid in such a quantity that the pH of the spray solution is less than or equal to 6, wherein the shirring density is up to 1:200 and the length of the shirred concertina is 40 to 100 cm, and wherein the concertina has an external diameter of from 25 to 90 mm and an internal diameter of from 12 to 45 mm.

2. The concertinaed packaging casing as claimed in claim 1, wherein the concentration range of the constituents of the spray solution is 2 to 25%, especially 5 to 10% by weight.

3. The concertinaed packaging casing as claimed in claim 1, wherein the bactericide in a concentration of from 0.1 to 0.3% by weight, relative to the spray solution, and a lubricant have been added to the spray solution.

4. The concertinaed packaging casing as claimed in claim 3, wherein the spray solution contains an oil-in-water emulsion with an emulsifier based on a fatty acid ester of sorbitol, wherein the oil is a triglyceride and wherein the oil-in-water emulsion amounts to 5 to 10% by weight of the spray solution.

5. The concertinaed packaging casing as claimed in claim 1, wherein the tube material in the unshirred state has a caliber of 20 to 68 mm, especially of 45 mm, and, when being filled with sausage meat, curls to form a casing ring for sausage rings.

6. The concertinaed packaging casing as claimed in claim 1, wherein the tube material contains a polymer mix of polyamide-6 and 10 to 90% by weight of a copolyamide of units of hexamethylenediamine, isophthalic and terephthalic acids.

7. The concertinaed packaging casing as claimed in claim 6, wherein the tube material contains a polymer mix of polyamide-6 and 10 to 30% by weight of a copolyamide.

8. The concertinaed packaging casing as claimed in claim 1, wherein the tube material comprises
a) polyamide-6,
b) 5 to 50% by weight, relative to the total weight of all the polymers in the layer, of an
b₁) aliphatic copolyamide with units of the formulae -NH-[CH₂]₅-CO- and -NH-[CH₂]ₘ-CO-, m being an integer from 7 to 11, and/or of an
b₂) aliphatic copolyamide with units of the formulae -NH-[CH₂]₅-CO-, -NH-[CH₂]ₙ-NH- and -CO-[CH₂]ₒ-CO-, n being an integer from 6 to 12 and o being an integer from 7 to 10,
if appropriate
c) up to 20% by weight of an amorphous copolyamide with units of hexamethylenediamine, terephthalic and isophthalic acids
and, if appropriate,
d) up to 20% by weight of a polyolefin modified with carboxyl groups.

9. The concertinaed packaging casing as claimed in claim 8, wherein the molar ratio between the units of the formula -NH-[CH₂]₅-CO- and those of the formula -NH-[CH₂]ₘ-CO- in the aliphatic copolyamide b₁) is from 95:5 to 20:80, preferably from 60:40 to 30:70.

10. The concertinaed packaging casing as claimed in claim 8 or 9, wherein the molar ratio between the units of the formula -NH-[CH₂]₅-CO- and those of the formulae -NH-[CH₂]ₙ-NH- and -CO-[CH₂]ₒ-CO- in the aliphatic copolyamides b₂) is from 95:5 to 25:75, preferably from 70:30 to 30:70.

11. The concertinaed packaging casing as claimed in one or more of claims 8 to 10, wherein in the aliphatic copolyamides b₁) m is 7 or 11.

12. The concertinaed packaging casing as claimed in one or more of claims 8 to 11, wherein in the aliphatic copolyamides b₂) n is 6 and o is 7, 8 or 10.

13. The concertinaed packaging casing as claimed in one or more of claims 8 to 12, wherein the proportion of the component b) is 10 to 30% by weight, that of the component c) is 5 to 15% by weight and that of the component d) is also 5 to 15% by weight, each relative to the total weight of all the polymers in the layer.

14. The concertinaed packaging casing as claimed in one or more of claims 8 to 13, wherein the polyolefin d) modified with carboxyl groups is a copolymer with units of ethylene and (meth)acrylic acid.

15. The concertinaed packaging casing, which contains more than one layer as claimed in one or more of claims 8 to 14.

16. The concertinaed packaging casing as claimed in claim 15, wherein the layer of the polyamide blend indicated is followed by alternating further layers of the polyolefin and polyamide types.

17. A process for producing a single-layer or multilayer packaging casing by converting the components, forming the casing or the individual layers of the casing, into a homogeneous melt, extruding the melt through one or more annular dies to form a seamless tube, subsequently stretching the casing in the longitudinal and transverse directions and thermofixing, which comprises producing at least one layer of the packaging casing from the polymer blend as claimed in one or more of claims 8 to 16, and treating the packaging casing before shirring to give a concertina with a spray solution containing an emulsifier, a potassium sorbate, a lactide acid and a bactericide.

18. The use of the concertinaed packaging casing as claimed in one or more of claims 8 to 16 for sausage rings, the packaging casing being able to be slipped without soaking in water over a horn for the sausage meat.

## Revendications

1. Gaine d'emballage en forme de chenille à base de polymères, en particulier un boyau artificiel pour saucisses à base de polyamide, qui est plissée à partir d'un matériau tubulaire étiré dans une orientation biaxiale et thermofixé, une solution pulvérisée, qui contient un émulsifiant, étant appliquée sur le matériau tubulaire avant le plissage, **caractérisée en ce que** la solution pulvérisée contient un bactéricide, ainsi que du sorbate de potassium et un acide lactique en une quantité telle que la valeur du pH de la solution pulvérisée est inférieure ou égale à 6, **en ce que** la densité de plissage ne dépasse pas 1:200 et la longueur de la chenille plissée est de 40 à 100 cm et **en ce que** la chenille a un diamètre extérieur de 25 à 90 mm et un diamètre intérieur de 12 à 45 mm.

2. Gaine d'emballage en forme de chenille selon la revendication 1, **caractérisée en ce que** la plage de concentration des substances contenues dans la solution pulvérisée est de 2 à 25 % en poids, en particulier de 5 à 10 % en poids.

3. Gaine d'emballage en forme de chenille selon la revendication 1, **caractérisée en ce que** le bactéricide est ajouté avec une concentration de 0,1 à 0,3 % en poids par rapport à la solution pulvérisée et un lubrifiant est ajouté à la solution pulvérisée.

4. Gaine d'emballage en forme de chenille selon la revendication 3,
**caractérisée en ce que** la solution pulvérisée contient une émulsion d'huile et d'eau avec un émulsifiant à base d'ester d'acide gras de sorbitol, **en ce que** l'huile est un triglycéride et **en ce que** l'émulsion d'huile et d'eau est ajoutée à raison de 5 à 10 % en poids par rapport à de la solution pulvérisée.

5. Gaine d'emballage en forme de chenille selon la revendication 1, **caractérisée en ce que** le matériau tubulaire à l'état non plissé a un calibre de 20 à 68 mm, en particulier 45 mm, et au moment du remplissage avec la chair à saucisse se tord pour former une gaine en forme de couronne pour des saucisses en couronne.

6. Gaine d'emballage en forme de chenille selon la revendication 1, **caractérisée en ce que** le matériau tubulaire est un mélange polymère de polyamide 6 et contient 10 à 90 % en poids d'un copolyamide contenant des unités d'hexaméthylène diamine, d'acide isophtalique et d'acide térephtalique.

7. Gaine d'emballage en forme de chenille selon la revendication 6, **caractérisée en ce que** le matériau tubulaire est un mélange polymère de polyamide 6 et contient 10 à 30 % en poids d'un copolyamide.

8. Gaine d'emballage en forme de chenille selon la revendication 1, **caractérisée en ce que** le matériau tubulaire est composé de
a) polyamide 6,
b) 5 à 50 % en poids, par rapport au poids total de tous les polymères contenus dans la couche, d'un
b₁) copolyamide aliphatique avec des unités de formules-NH-[CH₂]₅-CO- et -NH-[CH₂]ₘ-CO-, m étant un nombre entier de 7 à 11, et/ou d'un
b₂) copolyamide aliphatique avec des unités de formule -NH-[CH₂]₅-CO-, -NH-[CH₂]ₙ-NH- et -CO-[CH₂]ₒ-CO-, n étant un nombre entier de 6 à 12 et o un nombre entier de 7 à 10,
le cas échéant,
c) jusqu'à 20 % en poids d'un copolyamide amorphe avec des unités d'hexaméthylène diamine, d'acide térephtalique et d'acide isophtalique
et le cas échéant,
d) jusqu'à 20 % en poids d'une polyoléfine modifiée avec des groupes carboxy.

9. Gaine d'emballage en forme de chenille selon la revendication 8, **caractérisée en ce que** le rapport molaire des unités de formule -NH-[CH₂]₅-CO- par rapport aux unités de formule -NH-[CH₂]ₘ-CO- dans le copolyamide aliphatique b₁) est de l'ordre de 95/5 à 20/80, de préférence de 60/40 à 30/70.

10. Gaine d'emballage en forme de chenille selon la revendication 8 ou 9, **caractérisée en ce que** le rapport molaire des unités de formule -NH-[CH₂]₅-CO- par rapport aux unités de la formule -NH-[CH₂]ₙ-NH- et -CO-[CH₂]ₒ-CO- dans les copolyamides aliphatiques b₂) est de l'ordre de 95/5 à 25/75, de préférence de 70/30 à 30/70.

11. Gaine d'emballage en forme de chenille selon une ou plusieurs des revendications 8 à 10, **caractérisée en ce que** dans les copolyamides aliphatiques b₁), m est égal à 7 ou 11.

12. Gaine d'emballage en forme de chenille selon une ou plusieurs des revendications 9 à 12, **caractérisée en ce que** dans les copolyamides aliphatiques b₂), n est égal à 6 et o est égal à 7, 8 ou 10.

13. Gaine d'emballage en forme de chenille selon une ou plusieurs des revendications 8 à 12, **caractérisée en ce que** la teneur des composants b) est de 10 à 30 % en poids, celle des composants c) est de 5 à 15 % en poids et celle des composants d) est également de 5 à 15 % en poids, dans chaque cas par rapport au poids total de tous les polymères contenus dans la couche.

14. Gaine d'emballage en forme de chenille selon une ou plusieurs des revendications 8 à 13, **caractérisée en ce que** la polyoléfine d) modifiée avec des groupes carboxy est un copolymère avec des unités d'éthylène et d'acide (méth)acrylique.

15. Gaine d'emballage en forme de chenille **caractérisée en ce qu'**elle contient plus d'une couche selon une ou plusieurs des revendications 8 à 14.

16. Gaine d'emballage en forme de chenille selon la revendication 15, **caractérisée en ce que** la couche formée par le composé de polyamide mentionné est suivie en alternance par d'autres couches du type polyoléfine et polyamide.

17. Procédé de fabrication d'une gaine d'emballage à une ou plusieurs couches par la transformation des composants formant la gaine ou les différentes couches de la gaine en une coulée homogène, extrusion de la coulée à travers une ou plusieurs buses annulaires pour former un tube sans jointure, ensuite étirement de la gaine dans le sens longitudinal et le sens transversal, ainsi que thermofixage, **caractérisé en ce qu'**au moins une couche de la gaine d'emballage est formée par un composé polymère selon une ou plusieurs des revendications 8 à 16 et **en ce que** la gaine d'emballage avant le plissage sous forme de chenille est traitée avec une solution pulvérisée qui contient un émulsifiant, du sorbate de potassium, un acide lactique et un bactéricide.

18. Utilisation de la gaine d'emballage selon une ou plusieurs des revendications 8 à 16 pour des saucisses en couronne, la gaine d'emballage pouvant être emmanchée sans trempage sur un tube de remplissage pour la chair à saucisse.
